# EUROPEAN PATENT SPECIFICATION

(11) **EP 4 049 360 B1**
(45) Date of publication and mention of the grant of the patent: **27.05.2026**
(21) Application number: 20789524.4
(22) Date of filing: 02.10.2020
(51) Int. Cl.: H02K 7/18, H02K 35/02

(54) **MAGNET ENABLED POWER GENERATOR**
MAGNETISCHER STROMGENERATOR
GÉNÉRATEUR D'ÉNERGIE À AIMANT

(30) Priority: 23.10.2019 SE 1930344
(43) Date of publication of application: 31.08.2022
(73) Proprietor: Revibe Energy AB, 412 63 Göteborg (SE)
(72) Inventor: VIKERFORS, Andreas, 442 72 Kärna (SE); GODTMAN KLING, Erik, 414 76 Göteborg (SE)
(74) Representative: Westpatent AB
(86) International application number: PCT/EP2020/077696
(87) International publication number: WO 2021/078497

(56) References cited:
- EP-A1- 3 547 510
- WO-A1-2015/072664
- WO-A1-2015/140958
- WO-A1-2018/164583
- WO-A1-2019/027412
- US-A1- 2012 194 008
- US-A1- 2013 193 693
- US-A1- 2016 252 071

## Description

### TECHNICAL FIELD

The present disclosure relates to an energy harvesting device for converting mechanical energy to electrical energy. The device permits harvesting mechanical energy from vibrations and the conversion to usable electrical energy.

### BACKGROUND

It is not desirable to power electrically powered equipment with power cords in some applications. Power cords are prone to breaking if exposed. Internal/protective mounting of power cords is expensive and adds complexity. Alternatively, electrically powered equipment can be powered by batteries. Batteries, however, require frequent replacing or recharging.

An energy harvesting device converts mechanical energy to usable electrical energy. Such a device can replace or complement batteries in applications where mechanical motion is present, e.g. vibrations.

Known energy harvesting devices often comprise a magnet moving through an electrically conductive coil, thereby converting mechanical energy to electrical energy through induction.

US5975714 discloses an example energy harvesting device, where the magnet is allowed longitudinal oscillation inside a barrel, wherein the coil is wrapped around the barrel. The path of mobility of the magnet is limited by a first and second end spring configured at either end of the barrel. US2016252071 discloses a flotation device comprising a linear electric generator.

WO2019027412 discloses an energy harvesting components using electromagnetic transduction mechanisms.

WO2015072664 discloses an energy harvester having an adjustable resonance frequency.

WO2015140958 discloses a vibration-powered generator.

US2013193693 discloses an energy harvester.

US2012194008 discloses a vibration energy generator.

EP3547510 discloses a vibration actuator.

WO2018164583 discloses an energy harvesting buoy.

Although an energy harvesting device is configured to convert mechanical energy to electrical energy, it is prone to damage or breaking when exposed to extreme vibrations or shocks.

There is a need for more robust energy harvesting devices.

### SUMMARY

It is an object of the present disclosure to provide a robust energy harvesting device according to claim 1.

The energy harvesting device comprises a rod extending in a reciprocation direction. A movable magnet is oriented in polar opposition in the reciprocation direction. The movable magnet is journaled about the rod, where the movable magnet is configured to reciprocate along the rod in the reciprocation direction. The energy harvesting device further comprises at least one coil, wherein the movable magnet is arranged to pass through the coil when the movable magnet is reciprocating in the reciprocation direction. The energy harvesting device also comprises a first and second end magnet. Each end magnet is oriented in polar opposition to the movable magnet. The first and second end magnets arranged at respective ends of the rod, thereby generating a repulsive magnetic force between the end magnets and the movable magnet.

This way, mechanical energy can be converted into usable electrical energy by a robust energy harvesting device that is resilient to damage and breaking. The rod limits the movement of the movable magnet in any other direction than along the rod, which is advantageous since movement in other directions reduces the energy conversion efficiency and may break or damage any of the components in the energy harvesting device. The end magnets limit the magnitude of the reciprocation movement of the movable magnet, which is advantageous since the movable magnet might break if the reciprocation magnitude is large. Preferably, the movable magnet fits snugly on the rod, with minimal play.

According to the invention, the energy harvesting device further comprises resilient members. The resilient members are arranged in vicinity of respective ends of the rod.

The resilient members are configured to limit reciprocation of the movable magnet before the movable magnet contacts an end magnet.

The resilient members conserve excessive mechanical energy and protect the magnets from breaking, thereby providing a more robust and energy efficient energy harvesting device.

According to aspects, at least one resilient comprises an end bushing.

Thereby, excessive mechanical energy is conserved, and the magnets are protected when the end bushing is compressed, during strong vibrations or shocks.

According to aspects, at least one resilient comprises an end spring.

The end spring conserves excessive mechanical energy and protects the magnets from breaking when the end spring is compressed.

According to aspects, the end spring comprises a flexible material.

This way, the energy conversion efficiency and robustness of the energy harvesting device is improved when the end spring is fully compressed.

According to aspects, the movable magnet comprises a carrier.

This way, it is possible that a carrier with several smaller magnets constitute the movable magnet, which can be beneficial from a manufacturing point of view. The carrier for the movable magnet is designed such that the energy harvesting device has a pre-determined resonance frequency. Extra mass may be added to the carrier by mounting extra weight to the carrier. This way, the resonance frequency of the energy harvesting device may be tuned without replacing any components in the energy harvesting device, which saves manufacturing costs.

According to aspects, the movable magnet bears against the rod by a longitudinal bearing.

This way, the friction between the movable magnet and the rod is reduced and the energy conversion efficiency of the energy harvesting device is improved.

According to the invention, the energy harvesting device comprises a first end seat, on which the first end magnet is arranged. The energy harvesting device also comprises a second end seat, on which the second end magnet is arranged, and a spacer arranged to distance the first end seat from the second end seat. The energy harvesting device further comprises a predetermined number of washers, wherein a washer is placeable: between the first end seat and the spacer; between the second end seat and the spacer; and/or between an end seat and an exterior housing of the energy harvesting device.

Thereby, the predetermined number of washers can be rearranged to tune the resonance frequency, without replacing, removing, or adding any components, and while using the same size housing, which is an advantage, since it, e.g., saves manufacturing costs and simplifies the manufacturing process.

According to aspects, the outer shape of the energy harvesting device is arranged so that it is mountable in a standard holder for a battery such as a D, C, A, AA, AAA, AAAA, E-block battery or any other standard battery size.

This way, the energy harvesting device may replace any standard battery, which saves costs during deployment of the energy harvesting device, since no modifications for installment are required.

According to aspects, the energy harvesting device is arranged on construction equipment.

This way, electrically powered equipment may be powered even though power cords and batteries alone are undesired.

The methods disclosed herein are associated with the same advantages as discussed above in connection to the different energy harvesting devices.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

### BRIEF DESCRIPTION OF THE DRAWINGS

The present disclosure will now be described in more detail with reference to the appended drawings, where
Figures 1-2 schematically illustrate example energy harvesting devices,
Figures 3-4 illustrate how a resonance frequency can be tuned,
Figures 5-6 show details of example energy harvesting devices,
Figure 7 shows an example end spring,
Figure 8 shows a flowchart illustrating methods, and
Figures 9-11 show details of example energy harvesting devices from different angles.

### DETAILED DESCRIPTION

Aspects of the present disclosure will now be described more fully with reference to the accompanying drawings. The different devices and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

There are disclosed herein various types of energy harvesting devices. The disclosed energy harvesting devices have the ability of converting mechanical energy into electrical energy. Energy harvesting devices often comprise a magnet moving through an electrically conductive coil, thereby converting mechanical energy to electrical energy through induction. This energy conversion principle is disclosed, e.g., in US 5,818,132. Copper is an example of an electrically conductive material.

Examples of mechanical energy are vibration or mechanical shock. Vibration is mechanical oscillation or movement of an object about a point of equilibrium, which can be periodic or random. Mechanical shock, or physical shock, on the other hand, is a sudden acceleration of an object. Vibration and shock can be measured in units of acceleration (m/s²) or in multiples of the surface gravitational acceleration of Earth (g). Periodic vibration may also be characterized in terms of frequency.

The magnitude of shocks and vibrations varies from application to application. A shock or vibration may be considered strong if an object exposed the shock or vibration is prone to break. Construction equipment, such as demolition and mining tools, is an example application presenting strong vibrations and shocks for energy harvesting devices. Shocks can be in the order of 10000 g and vibrations can be in the order of 20 g in such applications.

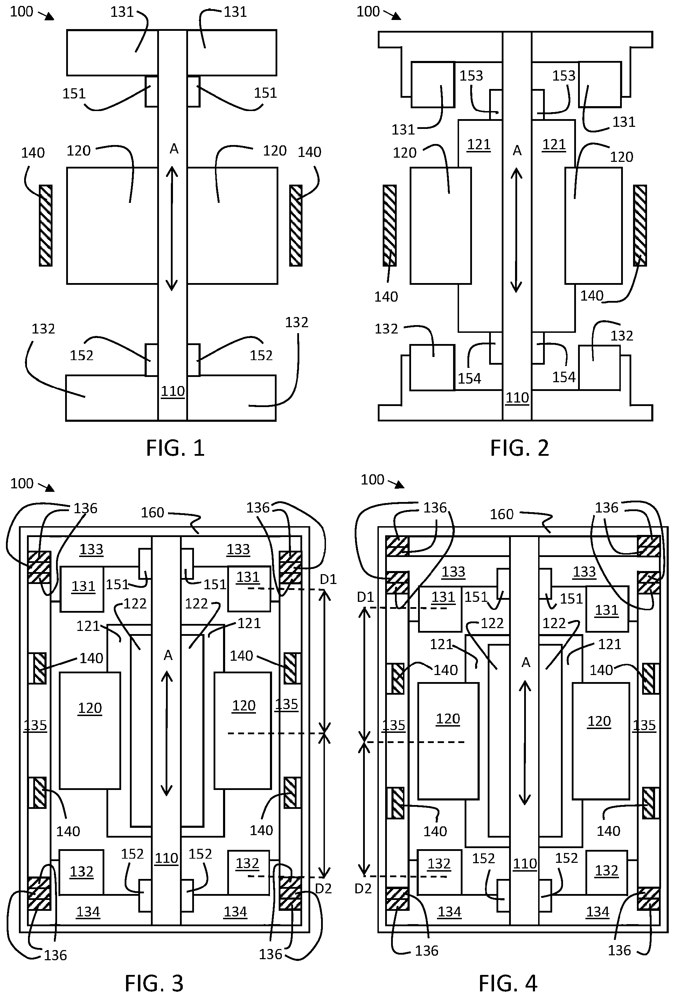

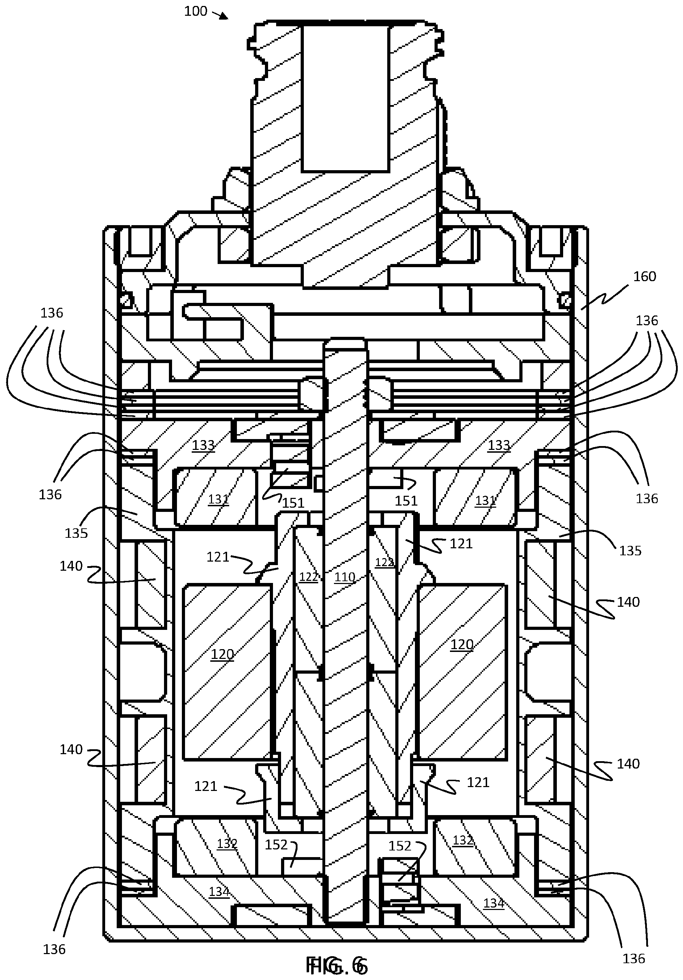

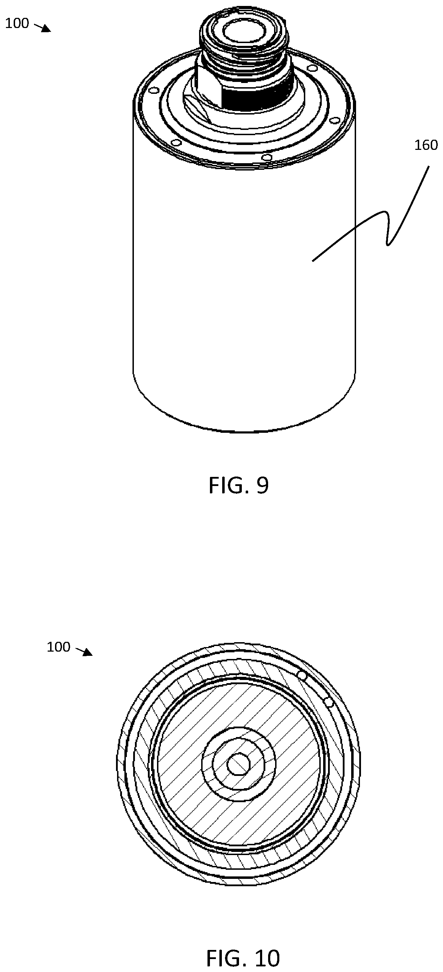

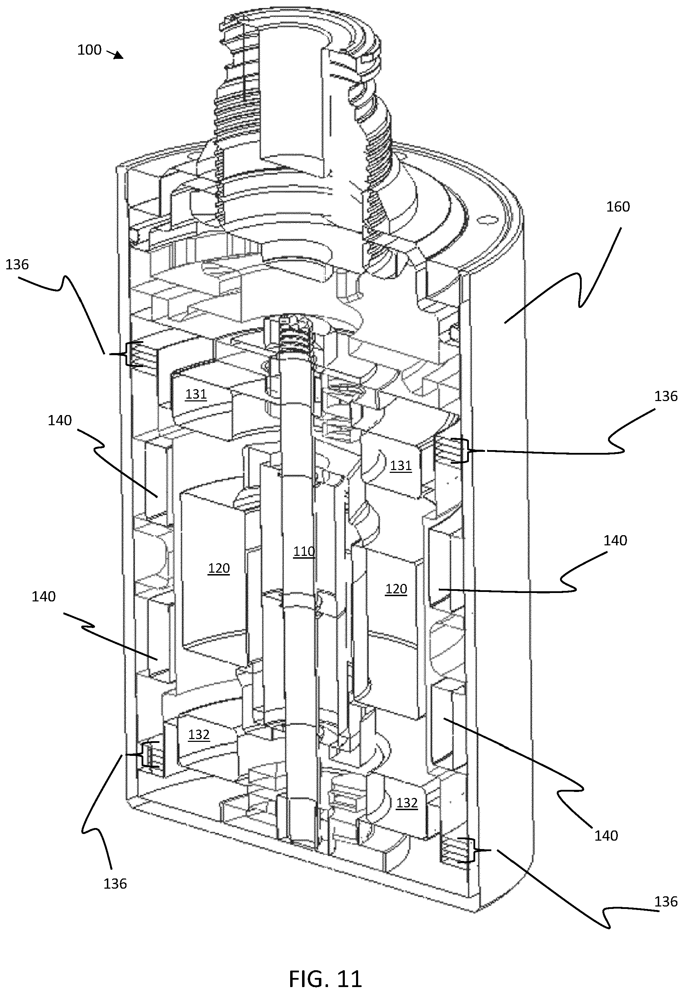

Figure 1 illustrates an example energy harvesting device 100. More detailed views of the energy harvesting device are shown in Figures 2-6 and 9-11.

The energy harvesting device 100 comprises a movable magnet 120, arranged to reciprocate between a first and second end magnet 131,132, in a reciprocation direction A. The movable magnet is oriented in polar opposition relative to the reciprocation direction, i.e. the north and south poles are oriented on an axis in the reciprocating direction. The two end magnets are, in turn, oriented in polar opposition to the movable magnet. For example, if the movable magnet is oriented with its north pole facing in a first direction (say upwards in Figure 1), and its south pole facing in a direction opposite to the first direction (downwards in Figure 1), the two end magnets are oriented with their respective south poles facing in the first direction (up in Figure 1) and their respective north poles facing in the direction opposite to the first direction (down in Figure 1). As a result of the repulsive forces generated between the movable magnet and the end magnets, the movable magnet is held in an equilibrium position between the two end magnets when the energy harvesting device is not exposed to any mechanical energy.

The energy harvesting device 100 may be encapsulated in a housing 160, as is shown in Figure 3. The two end magnets 131,132 have fixed positions relative to the housing whereas the movable magnet 120 is a moving component relative to the housing 160. When the housing is exposed to mechanical energy with an acceleration component in the reciprocation direction A, the movable magnet will reciprocate in the reciprocation direction, passing through at least one coil 140.

The energy harvesting device has a resonance frequency determined by, i.a., the magnetic flux of the movable magnet, the magnetic flux of the end magnets, and the mass of the movable magnet. EP1936787B1 teaches that the conversion from mechanical energy to electrical energy is the most efficient if the mechanical energy comprises vibration of frequencies at or close at the resonance frequency of the energy harvesting device. The vibration frequency can, e.g., be within the span 10 Hz to 10 kHz. However, it is appreciated that a device like the one discussed herein can be tuned to a wide range of different vibration frequencies.

The coil or coils 140 of the energy harvesting device 100 may be connected to a circuit, chip, or printed circuit board. A circuit may, for example, rectify the electrical output to a constant voltage, and/or store energy in a battery or capacitor. EP1936787B1 discloses examples of such configurations in energy harvesting devices. US 5,818,132 teaches configurations of the movable magnet and the coils for effective energy conversion, such as the separation of the coils relative to the length of the movable magnet.

For efficient conversion from mechanical energy to electrical energy, the movable magnet 120 should move easily in the reciprocation direction A. Movement in any other direction is unwanted since the mechanical energy is not converted into electrical energy. Furthermore, unwanted movement of the movable magnet may damage or break any of the components in the energy harvesting device 100. The magnets 120,131,132 are especially affected since they normally are made in somewhat brittle material. Therefore, the energy harvesting devices disclosed herein are designed to be robust towards unwanted movement of the movable magnet, which is an advantage over known energy harvesting devices. More specifically, the energy harvesting devices disclosed herein comprise a rod 110 extending in a reciprocation direction A. The movable magnet 120 is oriented in polar opposition in the reciprocation direction, and the movable magnet is journaled about the rod. The movable magnet is configured to reciprocate along the rod in the reciprocation direction. The energy harvesting device further comprises at least one coil 140, wherein the movable magnet is arranged to pass through the coil when the movable magnet is reciprocating in the reciprocation direction. At the respective ends of the rod, a first and second end magnet 131,132 are arranged, where they are oriented in polar opposition to the movable magnet.

It is appreciated that the rod 110 does not necessarily have a circular cross section, rather, the rod may have a range of different cross section shapes, such as square, rectangular etc. Preferably, the movable magnet 120 fits snugly on the rod, with minimal play.

The movable magnet 120 and end magnets 131,132 comprise permanent magnets. The energy harvesting device 100 may comprise any type of permanent magnets. It is, however, advantageous if the magnetic field strength of the magnets lasts for a long time (e.g. 20-30 years or more). Additionally, a large magnetic strength, i.e. many magnetic flux lines through the coils, is beneficial for an effective energy harvesting device. Rare earth magnets, such as neodymium magnets, are examples of permanent magnets with large magnetic strength with a long lifetime.

The respective magnetic strengths of the movable magnet 120 and the end magnets 131,132, together with the mass of the movable magnet are selected for a predetermined resonance frequency of the energy harvesting device. They are also selected for limiting the mobility of the movable magnet in the reciprocation direction A at the respective ends of the rod 110. The movable magnet should not physically engage the end magnets for an efficient conversion from mechanical energy to electrical energy. However, when the energy harvesting device is exposed to excessive mechanical energy, i.e. strong vibrations or shocks, the movable magnet is likely to make physical contact with one or both end magnets. This causes a reduction of the energy conversion efficiency and the magnets may break, which of course is undesired. Therefore, the energy harvesting device 100 further comprises resilient members 151,152,153,154. The resilient members are arranged in vicinity of respective ends of the rod 110.

The resilient members are configured to limit reciprocation of the movable magnet 120 before the movable magnet contacts an end magnet 131,132. The resilient members - at least partly - conserve excessive energy and protect the magnets from breaking, thereby providing a more robust energy harvesting device.

When the movable magnet 120 is physically engaging the resilient members 151,152,153,154 while reciprocating, the energy harvesting device 100 will have a second, higher resonance frequency. A principle of two resonance frequencies is taught by EP1936787B1 and will therefore not be discussed in more detail herein.

A resilient member 151,152,153,154 may comprise an end bushing. A bushing comprises a flexible or resilient material that can compress in response to a compression force, such as the force from an impacting moving magnet. Thereby, excessive energy is conserved and the magnets 120,131,132 are protected when the end bushing is compressed, during strong vibrations or shocks. A resilient member may further comprise an end spring, which conserves excessive energy and protects the magnets from breaking when the end spring is compressed. It is noted that the resilient members may comprise any combination of end bushings and end springs. Eventually, when the mechanical energy is high enough, the end springs fully compress. Therefore, the end spring 151,152,153,154 optionally comprises a flexible material, thereby further improving the energy conversion efficiency and the protection of the magnets 120,131,132. A flexible material is a material that can compress without breaking under operating conditions, which, in the present disclosure, is within an energy harvesting device exposed to strong shocks or vibrations. Examples of flexible materials are rubber, synthetic rubber, polyurethane or plastic polymer, such as polyvinyl chloride, PVC.

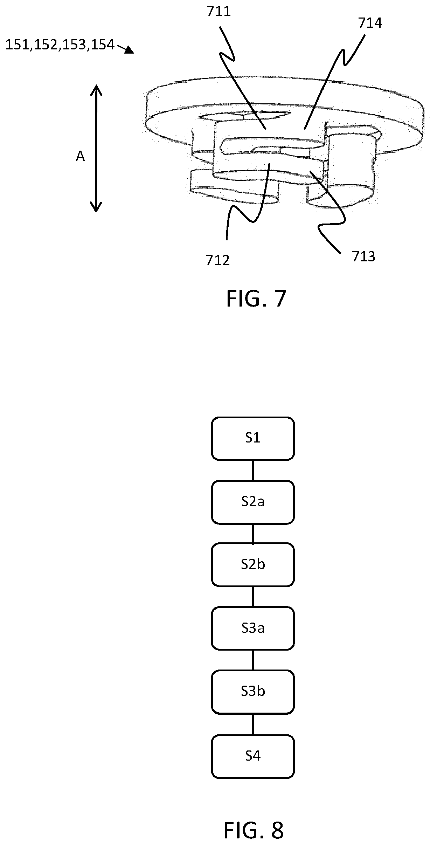

Figure 7 shows an example of an end spring 151,152,153,154. It is noted, however, that an end spring may comprise many different shapes or forms, such as a helical spring. Referring to Figure 7, the end spring comprises a first arm 711 and a second arm 712 arranged transversely with respect to the reciprocation direction A. When the end spring is fully compressed in the reciprocation direction A, the end of the first arm 713 contacts a seating point 714, whereupon the end spring assumes the function of a bushing. Thus, the ends spring may conserve additionally energy if it comprises a flexible material, which can further compress in the reciprocation direction.

It is noted that a resilient member 151,152,153,154 may be replaced by a secondary pair of magnets, where the first magnet in the pair is arranged in polar opposition in the reciprocation direction A, and the second magnet in the pair is arranged in polar opposition to the first magnet in the pair.

Figure 2 shows an energy harvesting device 100, where the movable magnet 120 comprises a carrier 121, i.e., where the movable magnet is arranged on a mechanical carrier structure. It is appreciated that the movable magnet and end magnets 131,132 are not necessarily solid. Either magnet may comprise a carrier. It is also possible that a carrier with several smaller magnets constitute the movable magnet or the end magnets. The carrier for the movable magnet is designed such that the energy harvesting device has a pre-determined resonance frequency. In some aspects of the energy harvesting device, extra mass may be added to the carrier by mounting extra weight to the carrier. This way, the resonance frequency of the energy harvesting device may be tuned without replacing any components in the energy harvesting device, which saves manufacturing costs. The carrier may comprise brass, wolfram or any other material associated with significant weight or density. The conversion efficiency from mechanical energy to electrical energy is dependent on the movable magnet 120 reciprocating freely in the reciprocation direction A. Therefore, the friction between the movable magnet and the rod 110 should be minimized. Consequently, in another embodiment of the energy harvesting device 100, the movable magnet bears against the rod by a longitudinal bearing 122. The bearing comprises, for example, a rolling-element bearing or plain bearing, although it is appreciated that other bearings are possible.

The energy harvesting device 100 may replace a battery. Therefore, the outer shape of the energy harvesting device is optionally arranged so that it is mountable in a standard holder for a battery such as a D, C, A, AA, AAA, AAAA, E-block battery or any other standard battery size.

The disclosed energy harvesting device is suitable for environments with strong vibrations and strong shocks. Hence, the energy harvesting device may be arranged on construction equipment. Examples of construction equipment are demolition and mining tools. Thus, there is disclosed herein construction equipment and demolition equipment and mining tools comprising the energy harvesting device 100.

To save manufacturing costs, it is desirable to tune the resonance frequency of the energy harvesting device without replacing, removing, or adding any components. According to the invention, frequency tuning is accomplished by washers. Therefore, the energy harvesting device 100 comprises a predetermined number of washers. The energy harvesting device further comprises: a first end seat 133, on which the first end magnet 131 is arranged; a second end seat 134, on which the second end magnet 132 is arranged; and a spacer 135 arranged to distance the first end seat 133 from the second end seat 134. The washers are placeable: between the first end seat 133 and the spacer 135; between the second end seat 134 and the spacer 135; and/or between an end seat 134,135 and an exterior housing 160 of the energy harvesting device.

The energy harvesting device in Figure 3 comprises six washers. Three washers are placed between the first end seat 133 and the spacer 135, and three washers are placed between the second end seat 134 and the spacer. The energy harvesting device in Figure 4 also comprises six washers. However, compared to Figure 3, one washer from either side of the spacer is rearranged to the top of first end seat. Comparing Figure 3 and 4, it is noted that the energy harvesting devices in both figures fit snugly in housings 160 having the same dimensions. In Figure 4, the end magnets 131,132 are placed closer to the movable magnet 120 in its equilibrium position, relative to the energy harvesting device in Figure 3. It is further noted that the equilibrium position of the movable magnet, relative to the coils 140, remains the same in Figures 3 and 4. Thereby, the predetermined number of washers can be rearranged to tune the resonance frequency, without changing any components, and while using the same size housing, which is an advantage. Figure 8 is a flow chart illustrating methods. There is shown a method for reconfiguring the resonance frequency of an energy harvesting device 100. The method comprises obtaining S1 a first desired distance D1 between a movable magnet 120 and a first end magnet 131 and a second desired distance D2 between the movable magnet and a second end magnet 132. The movable magnet is arranged in an equilibrium position between the first and second end magnets. The first end magnet is arranged on a first end seat 133 and the second end magnet is arranged on a second end seat 134. A spacer 135 is arranged to distance the first end seat from the second end seat. The spacer, the first and second end seats, and a number Z of washers 136 together extend to fit snugly inside a housing 160. The method further comprises determining S2a a number X1 of the Z washers for spacing the movable magnet from the first end magnet at the first desired distance D1. The method further comprises determining S2b a number X2 of the Z washers for spacing the movable magnet from the second end magnet at the second desired distance D2. The method further comprises: configuring S3a the number X1 of the Z washers between the first end seat and the spacer; configuring S3b the number X2 of the Z washers between the second end seat and the spacer; and configuring S4 the remainder Z-X1-X2 washers between an end seat and the housing, thereby maintaining the snug fit inside the housing.

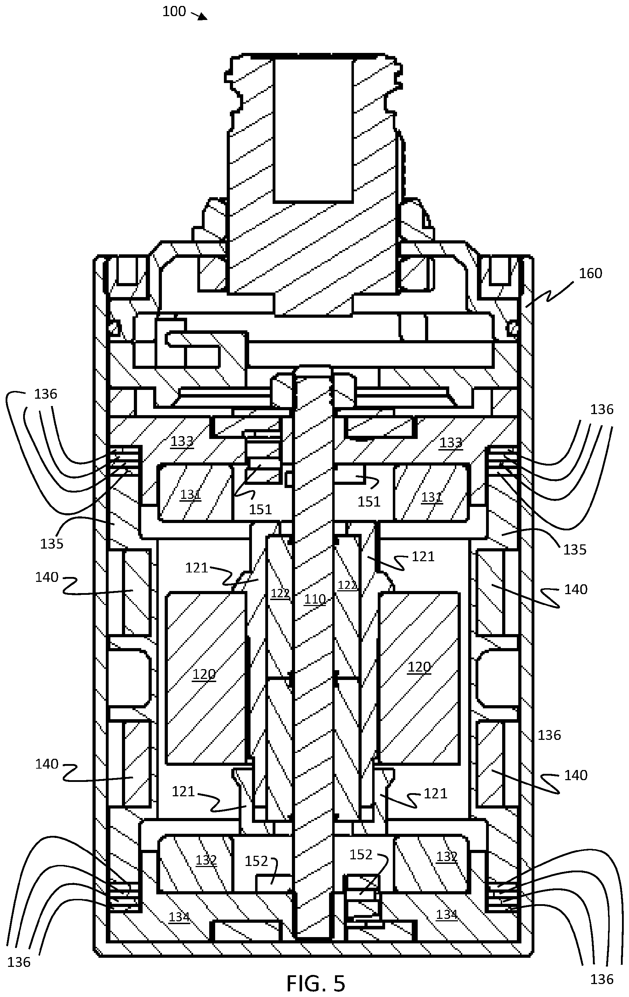

Figures 5, 6, 9, 10 and 11 show further example energy harvesting devices 100, where features described above are marked.

## Claims

1. An energy harvesting device (100) comprising:
a rod (110) extending in a reciprocation direction (A);
a movable magnet (120) oriented in polar opposition in the reciprocation direction (A), the movable magnet (120) journaled about the rod (110), where the movable magnet (120) is configured to reciprocate along the rod (110) in the reciprocation direction (A);
at least one coil (140), wherein the movable magnet (120) is arranged to pass through the coil (140) when the movable magnet (120) is reciprocating in the reciprocation direction (A);
a first and second end magnet (131,132), each end magnet (131,132) oriented in polar opposition to the movable magnet (120), the first and second end magnets (131,132) arranged at respective ends of the rod (110), thereby generating a repulsive magnetic force between the end magnets (131,132) and the movable magnet (120); and
a first and a second resilient member (151,152) arranged at respective ends of the rod (110), the resilient members (151,152) configured to engage the movable magnet (120) before the movable magnet (120) contacts an end magnet (131,132), **characterized in that** the energy harvesting device (100) further comprises a first end seat (133) on which the first end magnet (131) is arranged;
a second end seat (134), on which the second end magnet (132) is arranged;
a spacer (135) arranged to distance the first end seat (133) from the second end seat (134);
and a predetermined number of washers (136), wherein a washer is placeable:
between the first end seat (133) and the spacer (135);
between the second end seat (134) and the spacer (135);
and/or between an end seat (134, 135) and an exterior housing (160) of the energy harvesting device (100).

2. The energy harvesting device (100) according to claim 1, comprising a third and a fourth resilient member (153,154) arranged at respective ends of the movable magnet (120), the third and fourth resilient members (153,154) configured to limit the reciprocation of the movable magnet (120) before the movable magnet (120) contacts an end magnet (131,132).

3. The energy harvesting device (100) according to claim 1 or 2, wherein at least one resilient member (151,152,153,154) comprises an end spring.

4. The energy harvesting device (100) according to any previous claim, wherein at least one resilient member (151,152,153,154) comprises an end bushing.

5. The energy harvesting device (100) according to claim 3, wherein the end spring (151,152,153,154) comprises a flexible material.

6. The energy harvesting device (100) according to any previous claim, where the movable magnet (120) comprises a carrier (121).

7. The energy harvesting device (100) according to any previous claim, where the movable magnet (120) bears against the rod (110) by a longitudinal bearing (122).

8. The energy harvesting device (100) according to any previous claim, wherein the outer shape of the energy harvesting device (100) is arranged so that it is mountable in a standard holder for a battery such as a D, C, A, AA, AAA, AAAA, E-block battery or any other standard battery size.

9. Construction equipment comprising the energy harvesting device (100) according to any previous claim.

10. A method for reconfiguring the resonance frequency of an energy harvesting device (100) according to any previous claim, the method comprising:
obtaining (S1) a first desired distance (D1) between a movable magnet (120) and a first end magnet (131) and a second desired distance (D2) between the movable magnet (120) and a second end magnet (132), where the movable magnet (120) is arranged in an equilibrium position between the first and second end magnets (131,132), and where the first end magnet (131) is arranged on a first end seat (133), the second end magnet (132) is arranged on a second end seat (134), and a spacer (135) is arranged to distance the first end seat (133) from the second end seat (134), wherein the spacer (135), the first and second end seats (133, 134), and a number Z of washers (136) together extend to fit snugly inside a housing (160);
determining (S2a) a number X1 of the Z washers (136) for spacing the movable magnet (120) from the first end magnet (131) at the first desired distance (D1); determining (S2b) a number X2 of the Z washers (136) for spacing the movable magnet (120) from the second end magnet (132) at the second desired distance (D2);
configuring (S3a) X1 of the Z washers between the first end seat (133) and the spacer (135);
configuring (S3b) X2 of the Z washers between the second end seat (134) and the spacer (135);
configuring (S4) the remainder Z-X1-X2 washers between an end seat (133, 134) and the housing (160), thereby maintaining the snug fit inside the housing (160).

## Patentansprüche

1. Energieerntevorrichtung (100), umfassend:
eine Stange (110), die sich in eine Hin- und Herbewegungsrichtung (A) erstreckt;
einen bewegbaren Magneten (120), der in polarer Opposition in der Hin- und Herbewegungsrichtung (A) ausgerichtet ist, wobei der bewegbare Magnet (120) um die Stange (110) gelagert ist, wobei der bewegbare Magnet (120) konfiguriert ist, um sich entlang der Stange (110) in die Hin- und Herbewegungsrichtung (A) hin- und herzubewegen;
mindestens eine Spule (140), wobei der bewegbare Magnet (120) angeordnet ist, um durch die Spule (140) zu verlaufen, wenn sich der bewegbare Magnet (120) in die Hin- und Herbewegungsrichtung (A) hin- und herbewegt;
einen ersten und einen zweiten Endmagneten (131, 132), wobei jeder Endmagnet (131, 132) in polarer Opposition zu dem bewegbaren Magneten (120) ausgerichtet ist, wobei der erste und der zweite Endmagnet (131, 132) an jeweiligen Enden der Stange (110) angeordnet sind, wobei dadurch eine abstoßende Magnetkraft zwischen den Endmagneten (131, 132) und dem bewegbaren Magneten (120) erzeugt wird; und
ein erstes und ein zweites elastisches Element (151, 152), die an jeweiligen Enden der Stange (110) angeordnet sind, wobei die elastischen Elemente (151, 152) konfiguriert sind, um den bewegbaren Magneten (120) in Eingriff zu nehmen, bevor der bewegbare Magnet (120) einen Endmagneten (131, 132) berührt, **dadurch gekennzeichnet, dass**
die Energieerntevorrichtung (100) ferner umfasst
einen ersten Endsitz (133), auf dem der erste Endmagnet (131) angeordnet ist;
einen zweiten Endsitz (134), auf dem der zweite Endmagnet (132) angeordnet ist;
einen Abstandshalter (135), der angeordnet ist, um den ersten Endsitz (133) von dem zweiten Endsitz (134) zu beabstanden;
und eine zuvor bestimmte Anzahl von Scheiben (136), wobei eine Scheibe platzierbar ist:
zwischen dem ersten Endsitz (133) und dem Abstandshalter (135);
zwischen dem zweiten Endsitz (134) und dem Abstandshalter (135);
und/oder zwischen einem Endsitz (134, 135) und einem Außengehäuse (160) der Energieerntevorrichtung (100).

2. Energieerntevorrichtung (100) nach Anspruch 1, umfassend ein drittes und ein viertes elastisches Element (153, 154), die an jeweiligen Enden des bewegbaren Magneten (120) angeordnet sind, wobei das dritte und das vierte elastische Element (153, 154) konfiguriert sind, um die Hin- und Herbewegung des bewegbaren Magneten (120) zu begrenzen, bevor der bewegbare Magnet (120) einen Endmagneten (131, 132) berührt.

3. Energieerntevorrichtung (100) nach Anspruch 1 oder 2, wobei mindestens ein elastisches Element (151, 152, 153, 154) eine Endfeder umfasst.

4. Energieerntevorrichtung (100) nach einem der vorhergehenden Ansprüche, wobei mindestens ein elastisches Element (151, 152, 153, 154) eine Endbuchse umfasst.

5. Energieerntevorrichtung (100) nach Anspruch 3, wobei die Endfeder (151, 152, 153, 154) ein flexibles Material umfasst.

6. Energieerntevorrichtung (100) nach einem der vorhergehenden Ansprüche, wobei der bewegbare Magnet (120) einen Träger (121) umfasst.

7. Energieerntevorrichtung (100) nach einem der vorhergehenden Ansprüche, wobei der bewegbare Magnet (120) durch ein Längslager (122) an der Stange (110) anliegt.

8. Energieerntevorrichtung (100) nach einem der vorhergehenden Ansprüche, wobei die äußere Form der Energieerntevorrichtung (100) angeordnet ist, sodass sie in einer Standardfassung für eine Batterie wie eine D-, C-, A-, AA-, AAA-, AAAA-, E-Block-Batterie oder eine beliebige andere Standardbatteriegröße montierbar ist.

9. Baumaschinen, umfassend die Energieerntevorrichtung (100) nach einem der vorhergehenden Ansprüche.

10. Verfahren zum Rekonfigurieren der Resonanzfrequenz einer Energieerntevorrichtung (100) nach einem der vorhergehenden Ansprüche, das Verfahren umfassend:
Erhalten (S1) eines ersten gewünschten Abstands (D1) zwischen einem bewegbaren Magneten (120) und einem ersten Endmagneten (131) und eines zweiten gewünschten Abstands (D2) zwischen dem bewegbaren Magneten (120) und einem zweiten Endmagneten (132), wobei der bewegbare Magnet (120) in einer Gleichgewichtsposition zwischen dem ersten und dem zweiten Endmagneten (131, 132) angeordnet ist, und wobei der erste Endmagnet (131) auf einem ersten Endsitz (133) angeordnet ist, der zweite Endmagnet (132) auf einem zweiten Endsitz (134) angeordnet ist, und ein Abstandshalter (135) angeordnet ist, um den ersten Endsitz (133) von dem zweiten Endsitz (134) zu beabstanden, wobei sich der Abstandshalter (135), der erste und der zweite Endsitz (133, 134) und eine Anzahl Z von Scheiben (136) zusammen erstrecken, um in ein Gehäuse (160) passgenau zu passen;
Bestimmen (S2a) einer Anzahl X1 der Z Scheiben (136) zum Beabstanden des bewegbaren Magneten (120) von dem ersten Endmagneten (131) an dem ersten gewünschten Abstand (D1);
Bestimmen (S2b) einer Anzahl X2 der Z Scheiben (136) zum Beabstanden des bewegbaren Magneten (120) von dem zweiten Endmagneten (132) an dem zweiten gewünschten Abstand (D2);
Konfigurieren (S3a) von X1 der Z Scheiben zwischen dem ersten Endsitz (133) und dem Abstandshalter (135);
Konfigurieren (S3b) von X2 der Z Scheiben zwischen dem zweiten Endsitz (134) und dem Abstandshalter (135);
Konfigurieren (S4) der verbleibenden Z-X1-X2 Scheiben zwischen einem Endsitz (133, 134) und dem Gehäuse (160), wobei dadurch die passgenaue Passung in dem Gehäuse (160) aufrechterhalten wird.

## Revendications

1. Dispositif de récupération d'énergie (100) comprenant :
une tige (110) s'étendant dans une direction de va-et-vient (A) ;
un aimant mobile (120) orienté en opposition polaire dans la direction de va-et-vient (A), l'aimant mobile (120) étant tourillonné autour de la tige (110), où l'aimant mobile (120) est conçu pour faire un mouvement de va-et-vient le long de la tige (110) dans la direction de va-et-vient (A) ;
au moins une bobine (140), dans lequel l'aimant mobile (120) est agencé pour traverser la bobine (140) lorsque l'aimant mobile (120) effectue un mouvement de va-et-vient dans la direction de va-et-vient (A) ;
un premier et un second aimant d'extrémité (131, 132), chaque aimant d'extrémité (131, 132) étant orienté en opposition polaire à l'aimant mobile (120), les premier et second aimants d'extrémité (131, 132) étant agencés à des extrémités respectives de la tige (110), générant ainsi une force magnétique de répulsion entre les aimants d'extrémité (131, 132) et l'aimant mobile (120) ; et
un premier et un deuxième élément élastique (151, 152) agencés à des extrémités respectives de la tige (110), les éléments élastiques (151, 152) étant conçus pour venir en prise avec l'aimant mobile (120) avant que l'aimant mobile (120) n'entre en contact avec un aimant d'extrémité (131, 132), **caractérisé en ce que**
le dispositif de récupération d'énergie (100) comprend en outre
un premier siège d'extrémité (133) sur lequel est disposé le premier aimant d'extrémité (131) ;
un second siège d'extrémité (134), sur lequel est disposé le second aimant d'extrémité (132) ;
un espaceur (135) agencé pour éloigner le premier siège d'extrémité (133) du second siège d'extrémité (134) ;
et un nombre prédéterminé de rondelles (136), dans lequel une rondelle est plaçable :
entre le premier siège d'extrémité (133) et l'espaceur (135) ;
entre le second siège d'extrémité (134) et l'espaceur (135) ;
et/ou entre un siège d'extrémité (134, 135) et un boîtier extérieur (160) du dispositif de récupération d'énergie (100).

2. Dispositif de récupération d'énergie (100) selon la revendication 1, comprenant un troisième et un quatrième élément élastique (153, 154) agencés à des extrémités respectives de l'aimant mobile (120), les troisième et quatrième éléments élastiques (153, 154) étant conçus pour limiter le mouvement de va-et-vient de l'aimant mobile (120) avant que l'aimant mobile (120) n'entre en contact avec un aimant d'extrémité (131, 132).

3. Dispositif de récupération d'énergie (100) selon la revendication 1 ou 2, dans lequel au moins un élément élastique (151, 152, 153, 154) comprend un ressort d'extrémité.

4. Dispositif de récupération d'énergie (100) selon l'une quelconque revendication précédente, dans lequel au moins un élément élastique (151, 152, 153, 154) comprend une bague d'extrémité.

5. Dispositif de récupération d'énergie (100) selon la revendication 3, dans lequel le ressort d'extrémité (151, 152, 153, 154) comprend un matériau souple.

6. Dispositif de récupération d'énergie (100) selon l'une quelconque revendication précédente, où l'aimant mobile (120) comprend un support (121).

7. Dispositif de récupération d'énergie (100) selon l'une quelconque revendication précédente, où l'aimant mobile (120) s'appuie contre la tige (110) par un palier longitudinal (122).

8. Dispositif de récupération d'énergie (100) selon l'une quelconque revendication précédente, dans lequel la forme extérieure du dispositif de récupération d'énergie (100) est agencée de manière qu'il puisse être monté dans un support standard pour une pile telle qu'une pile D, C, A, AA, AAA, AAAA, PP3 ou toute autre taille de pile standard.

9. Équipement de construction comprenant le dispositif de récupération d'énergie (100) selon l'une quelconque revendication précédente.

10. Procédé de reconfiguration de la fréquence de résonance d'un dispositif de récupération d'énergie (100) selon l'une quelconque revendication précédente, le procédé comprenant :
l'obtention (S1) d'une première distance souhaitée (D1) entre un aimant mobile (120) et un premier aimant d'extrémité (131) et d'une seconde distance souhaitée (D2) entre l'aimant mobile (120) et un second aimant d'extrémité (132), où l'aimant mobile (120) est agencé dans une position d'équilibre entre les premier et second aimants d'extrémité (131, 132), et où le premier aimant d'extrémité (131) est agencé sur un premier siège d'extrémité (133), le second aimant d'extrémité (132) est agencé sur un second siège d'extrémité (134), et un espaceur (135) est agencé pour éloigner le premier siège d'extrémité (133) du second siège d'extrémité (134), dans lequel l'espaceur (135), les premier et second sièges d'extrémité (133, 134), et un nombre Z de rondelles (136) s'étendent ensemble pour s'adapter parfaitement à l'intérieur d'un boîtier (160) ;
la détermination (S2a) d'un nombre X1 des Z rondelles (136) pour espacer l'aimant mobile (120) du premier aimant d'extrémité (131) à la première distance souhaitée (D1) ;
la détermination (S2b) d'un nombre X2 des Z rondelles (136) pour espacer l'aimant mobile (120) du second aimant d'extrémité (132) à la seconde distance souhaitée (D2) ;
la configuration (S3a) de X1 des Z rondelles entre le premier siège d'extrémité (133) et l'espaceur (135) ;
la configuration (S3b) de X2 des Z rondelles entre le second siège d'extrémité (134) et l'espaceur (135) ;
la configuration (S4) des Z-X1-X2 rondelles restantes entre un siège d'extrémité (133, 134) et le boîtier (160), maintenant ainsi l'ajustement parfait à l'intérieur du boîtier (160).
